(19) Europäisches Patentamt
European Patent Office
Office européen des brevets

(11) Veröffentlichungsnummer: **0 184 091**
**B1**

(12) **EUROPÄISCHE PATENTSCHRIFT**

(45) Veröffentlichungstag der Patentschrift: **08.11.89**

(51) Int. Cl.⁴: **C08F 2/22**, C08F 291/00, C09D 3/74

(21) Anmeldenummer: **85114875.9**

(22) Anmeldetag: **23.11.85**

(54) **Verfahren zur Herstellung von Polymer-Dispersionen, die blockfeste Filme bilden.**

(30) Priorität: **01.12.84 DE 3443964**

(43) Veröffentlichungstag der Anmeldung: **11.06.86 Patentblatt 86/24**

(45) Bekanntmachung des Hinweises auf die Patenterteilung: **08.11.89 Patentblatt 89/45**

(84) Benannte Vertragsstaaten: **AT BE CH DE FR GB IT LI NL SE**

(56) Entgegenhaltungen:
**US-A- 3 431 226**
**US-A- 4 048 130**

(73) Patentinhaber: **BASF Aktiengesellschaft, Carl-Bosch-Strasse 38, D-6700 Ludwigshafen(DE)**

(72) Erfinder: **Mueller-Mall, Rudolf, Dr., Ulmenweg 39, D-6708 Neuhofen(DE)**
Erfinder: **Melan, Michael, Dr., Hans-Willmann-Strasse 4, D-6706 Wachenheim(DE)**
Erfinder: **Wistuba, Eckehardt, Dr., Im Obergarten 7, D-6702 Bad Duerkheim(DE)**
Erfinder: **Matthaei, Lothar, Am Westring, D-6714 Weisenheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft die Herstellung von Polymer-Dispersionen, die eine niedere Filmbildetemperatur aufweisen und Filme mit hoher Blockfestigkeit bilden, sowie die Verwendung dieser Polymer-Dispersionen als Bindemittel für Anstrichmittel. Es ist bekannt, daß Anstrichstoffe auf Basis von Lösungsmittel enthaltenden Alkydharzen Überzüge ergeben, die aufgrund einer autoxidativen Vernetzung blockfest sind. Bei diesen Systemen sind jedoch die mitzuverwendenden Lösungsmittel nachteilig, da diese an die Umwelt abgegeben werden. Dazu neigen derartige Anstrichstoffe zur Nachvernetzung, wodurch Rißbildung und Abplatzen der Beschichtungen auftritt, wie dies häufig bei Fenstern beobachtet werden kann, die mit Alkydharzen beschichtet sind. Schließlich werden Alkydharz-Beschichtungen durch Witterungseinflüsse, z.B. UV-Strahlen und Regenwasser, stark abgebaut. Ähnliche Nachteile zeigen auch Anstrichmittel auf Basis von wasserverdünnbaren Alkydharzen, bei denen der Lösungsmittelanteil noch etwa 20 Gew.% beträgt.

Zur Herstellung von Anstrichen werden auch 2-Komponenten-Systeme auf Basis von Epoxid-Harzen, Polyisocyanaten/Polyolen und säurehärtenden Lacken eingesetzt. Ein Nachteil derartiger Systeme ist die Giftigkeit der Komponenten und die begrenzte Lagerfähigkeit derartiger Abmischungen.

Auch wäßrige Polymer-Dispersionen können als Bindemittel für Anstrichmittel, die blockfeste Beschichtungen ergeben, eingesetzt werden. Dabei ist es jedoch Voraussetzung, daß die Polymeren hohe Glastemperaturen aufweisen. Derartige Polymer-Dispersionen bedürfen daher eines Zusatzes an Filmbildehilfsmitteln, z.B. von Benzin, Glykolether oder Estern wie Propylenglykol, Butyldiglykol und Butylglykolactat damit sie bei Raumtemperatur verfilmen. Derartige Gemische aus wäßrigen Polymer-Dispersionen von Polymeren mit hoher Glastemperatur und Filmbildehilfsmitteln der genannten Art, dessen Menge von der Glastemperatur und der molekularen Struktur des Polymeren sowie der Art des Filmbildehilfsmittels abhängt, bilden bei Raumtemperatur im allgemeinen transparente Filme, die nach Abgabe des Filmbildehilfsmittels an die Umwelt blockfest sind. Vermindert man bei derartigen Systemen den Anteil des Filmbildehilfsmittels, so muß das Polymere bei erhöhten Temperaturen, d.h. unter Erhitzen, verfilmt werden. Hohe Lösungsmittelmengen sind aber wegen der Umweltbelastung von Nachteil.

Darüber hinaus lassen die Eigenschaften von Beschichtungen auf Basis von Polymer-Dispersionen, deren Polymere Glastemperaturen im Bereich von 25 bis 60°C aufweisen, zu wünschen übrig, da die Polymerfilme eine geringe Dehnung aufweisen, so daß die Beschichtungen auf nicht dimensionsstabilen Untergründen, wie Holz reißen und abplatzen. Als weiterer Nachteil derartiger "harter" Polymer-Dispersionen, die nur unter Zusatz erhöhter Mengen an Filmbildehilfsmitteln verarbeitbar sind, ist die ungünstige Anfangsblockfestigkeit zu nennen, die auch bei Alkydharz-haltigen Beschichtungen auftritt. Unter Anfangsblockfestigkeit versteht man die Neigung zum Blocken der frisch aufgetragenen, nur kurz getrockneten Beschichtungen. Diese Blockneigung macht z.B. ein rasches Stapeln von beschichteten Substraten praktisch unmöglich. Sie wird durch die hohen, noch im Bindemittelfilm enthaltenen Mengen an Filmbildehilfsmittel, die von den üblichen Polymeren bei Raumtemperatur nur langsam abgegeben werden, verursacht. Bei einer bei Raumtemperatur durchgeführten Trocknung wird die Endblockfestigkeit häufig erst nach mehreren Tagen erreicht.

Der vorliegenden Erfindung liegt nun als Aufgabe ein Herstellungsverfahren für eine Polymer-Dispersion zugrunde, die bei Raumtemperatur mit höchstens geringen Mengen an Filmbildehilfsmitteln verfilmt und deren Filme hohe Dehnungswerte und gute Blockfestigkeit haben.

Es wurde nun gefunden, daß man wäßrige Polymer-Dispersionen, die eine niedere Filmbildetemperatur aufweisen und Filme mit hoher Blockfestigkeit bilden, durch mehrstufige Emulsionspolymerisation von überwiegenden Mengen monoolefinisch ungesättigten Monomeren A, deren Homopolymerisate eine Glastemperatur von 0 bis -72°C haben mit monoolefinisch ungesättigten Monomeren B, deren Homopolymerisate eine Glastemperatur von 80 bis 140°C haben, 0 bis 6 Gew.%, bezogen auf die gesamten Monomeren, monoolefinisch ungesättigte Monomere C, die Carboxyl- und/oder Carbonamidgruppen aufweisen und 0 bis 10 Gew.%, bezogen auf die gesamten Monomeren an vernetzend wirkenden olefinisch ungesättigten Monomeren D herstellen kann, indem man zunächst

a) 1 bis 10 Gew.% eines Monomeren-Gemisches (I) aus
75 bis 98 Gew.-Teilen Monomeren A,
2 bis 25 Gew.-Teilen Monomeren B,
0,5 bis 10 Gew.-Teilen Monomeren C und
0 bis 10 Gew.-Teilen Monomeren D
als Vorlage in Gegenwart von 0,1 bis 2 Gew.%, bezogen auf die gesamten Monomeren (der Monomerengemische I und II) anionischem Emulgator und von 0 bis 1 Gew.%, bezogen auf die gesamten Monomeren, nichtionischem Emulgator, sowie eines wasserlöslichen radikalbildenden Polymerisationsinitiators in 0,5 bis 4 %iger wäßrige Emulsion polymerisiert, sodann

b) den Rest des Monomerengemisches (I) nach Maßgabe des Fortschreitens der Emulsionspolymerisation zuführt und schließlich nach Beendigung des Zulaufs des Monomerengemisches (I)

c) unter Weiterführung der Emulsionspolymerisation nach Maßgabe des Verbrauchs ein Monomerengemisch (II) zuführt, das aus
75 bis 98 Gew.-Teilen Monomeren B,
2 bis 25 Gew.-Teilen Monomeren A,
0 bis 10 Gew.-Teilen Monomeren C,
0 bis 10 Gew.-Teilen Monomeren D und/oder
0 bis 15 Gew.-Teilen monoolefinisch ungesättigten Ureidoverbindungen
oder tert.-Aminoverbindungen
besteht, wobei der Anteil des Monomerengemisches (I) 40 bis 65 Gew.%, bezogen auf die Gesamtmenge der beiden Monomerengemische beträgt, als Monomere D monoolefinisch ungesättigte Carbonylverbindungen einsetzt, die Monomerengemische (I) und (II) dem Polymerisationsgefäß als solche oder als wäßrige Emulsion zugeführt werden, derart, daß die entstehende wäßrige Polymerdispersion einen Polymergehalt von 40 bis 60 Gew.-%, bezogen auf die Polymer-Dispersion, und einen Gehalt an anionischem Emulgator von 0,5 bis 3 Gew.%, bezogen auf das Polymere, hat, und der fertigen Polymerdispersion, wenn das Polymere Monomere D einpolymerisiert enthält, Hydrazide aliphatischer Dicarbonsäuren in einer Menge von 0,5 bis 1 Mol je Mol Carbonyl-Monomeres zusetzt.

Als Monomere A kommen monoolefinisch ungesättigte Carbonsäureester wie Ethylacrylat, n-Butylacrylat, iso-Butylacrylat und 2-Ethylhexylacrylat, n-Octylacrylat und -methacrylat, sowie ferner Ethylen in Frage. Geeignete Monomere B sind z.B. Styrol und Methylmethacrylat sowie Acrylnitril und Butylmethacrylat. Als Monomere C kommen vor allem 3- bis 5 C-Atome enthaltende Mono- und/oder Dicarbonsäuren und/oder deren Amide in Betracht. Die Menge an Monomeren C liegt vorzugsweise im Bereich von 1 bis 4 %, bezogen auf das gesamte Polymerisat. Von besonderem Interesse sind Acrylsäure und Methacrylsäure und deren Amide sowie ferner Crotonsäure, Itakonsäure und Maleinsäure und/oder deren Amide.

Geeignete monoolefinisch ungesättigte Carbonylverbindungen D sind vor allem Acrolein, Methacrolein, Diacetonacrylamid und -methacrylamid, sowie Acetessigsäurevinylester. Genannt sei ferner Acrylamidomethylacetylaceton.

Die Menge an vernetzend wirkenden Monomeren D liegt vorzugsweise zwischen 1 und 4 Gew.%, bezogen auf die gesamten Monomeren. Bei ihrem Einsatz findet eine Vernetzung nicht während der Polymerisation sondern erst bei der Anwendung, d.h. bei Filmbildung oder danach statt.

Als weitere Monomere kommen monoolefinisch ungesättigte Ureidoverbindungen, insbesondere monoolefinisch ungesättigte Derivate des Ethylenharnstoffs der allgemeinen Formel (α)

(α) 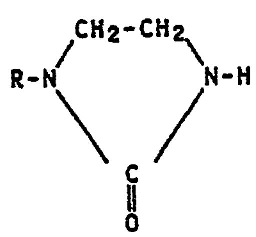

in Frage, in der R für monoolefinisch ungesättigte aliphatische Reste mit 2 bis 10 C-Atomen steht, wie

R = 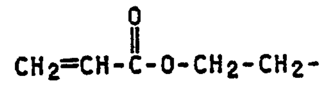

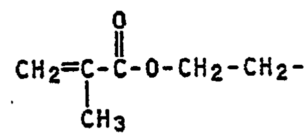

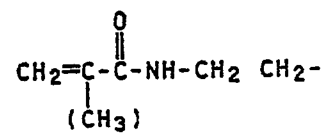

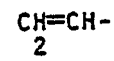

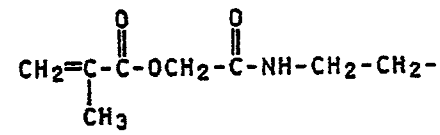

Beispiele für derartige Derivate des Ethylenharnstoffs sind N-Vinyl-N,N'-ethylenharnstoff, N-Vinyloxiethyl-N,N'-ethylenharnstoff, N-(β-Acrylamidoethyl)-N,N'-ethylenharnstoff sowie besonders N-(β-Acryloxiethyl)-N, N'-ethylenharnstoff und N-[β(α-Acryloxiacetamido)-ethyl]-N,N'-ethylenharnstoff.

Als monoolefinisch ungesättigte Monomere mit einer tertiären Aminogruppe, d.h. also monoolefinisch ungesättigte tert.Amino-Verbindungen kommen z.B. ω-N,N'-Dialkylamino-alkylacrylate und/oder -methacrylate in Frage, die in der esterartig gebundenen Alkylgruppe meist 2 bis 4 C-Atome und in den allein an die Amino-Stickstoffatome gebundenen Alkylgruppen 1 bis 4 C-Atome enthalten, wie besonders N,N-Diethylaminoethylacrylat und -methacrylat, ω-N,N'-Dimethylamino-propylacrylat und -methacrylat sowie N,N'-Di-n-butylaminoethylacrylat.

Für das neue Verfahren können die üblichen anionischen Emulgatoren eingesetzt werden, deren Menge vorzugsweise 0,5 bis 1,5 Gew.%, bezogen auf das Polymere, beträgt. Als solche sind besonders Schwefelsäureester von Fettalkoholen, wie Laurylsulfat, Sulfierungsprodukte von oxalkylierten, insbesondere oxethylierten, meist 8 bis 12 C-Atome im Alkylrest enthaltenden Alkylphenolen, wie besonders p-n-Nonyl- und p-n-Dodecylphenol sowie p-Isooctylphenol, wasserlösliche Alkalisalze von Fettsäuren, wie Natriumstearat und Natriumoleat und sulfonierte und alkylierte Biphenylether geeignet.

Als nicht-ionische Emulgatoren können bei dem neuen Verfahren z.B. oxalkylierte, vorzugsweise oxethylierte Fettalkohole, Fettamine, Fettsäureamide und/oder meist 8 bis 12 C-Atome in den Alkylgruppen enthaltende Monoalkylphenole, die 5 bis 30, insbesondere 10 bis 25 Ethylenoxid-Einheiten im Molekül enthalten, z.B. oxethylierter Laurylalkohol, oxethylierter Oleylalkohol, oxethylierter Spermölalkohol und oxethylierter Stearylalkohol, oxethyliertes Stearinsäureamid, oxethyliertes Oleylamid,

oxethylierte Ölsäure, oxethyliertes p-n-Nonylphenol, oxethylierter p-Isooctylphenol und oxethyliertes p-n-Dodecylphenol, eingesetzt werden.

Soweit ein nicht-ionischer Emulgator eingesetzt wird, kann dieser schon in der Vorlage und/oder bei der Weiterführung der Emulsionspolymerisation zu einem beliebigen späteren Zeitpunkt zugesetzt werden.

Bei dem neuen Verfahren können die üblichen radikalbildenden Polymerisationsinitiatoren in den üblichen Mengen eingesetzt werden. Besonders geeignet sind die Alkali- und Ammoniumsalze von Peroxisäuren, wie Kalium-, Natrium- und Ammoniumpersulfat.

Sehr gut geeignet sind auch die üblichen Redox-Katalysatoren z.B. Kombinationen aus Ammoniumpersulfat und Ammoniumhydrogensulfat oder Wasserstoffperoxid und Ascorbinsäure sowie tert.-Butylhydroperoxid und Natriumformaldehydsulfoxylat.

Die Menge an derartigen Initiatoren liegt bei 0,1 bis 2, vorzugsweise bei 0,2 bis 1 Gew.%, bezogen auf die Monomeren in der Vorlage. Bei der Weiterführung der Polymerisation wird dem Polymerisationsgemisch im allgemeinen weiterer Initiator derart zugegeben, daß dessen Menge insgesamt von 0,05 bis 2, insbesondere 0,1 bis 0,5 Gew.%, bezogen auf die gesamten Monomeren beträgt.

Den nach dem neuen Verfahren hergestellten Polymer-Dispersionen werden, wenn die Polymeren Monomere D einpolymerisiert enthalten, Hydrazide aliphatischer Dicarbonsäuren in einer Menge von 0,3 bis 1, vorzugsweise von 0,4 bis 0,8 Mol je Mol in das Polymere einpolymerisierten Carbonylmonomeren zugesetzt. Die geeigneten aliphatischen Dihydrazide leiten sich insbesondere von 2 bis 10, vorzugsweise 4 bis 6 C-Atomen enthaltenden Carbonsäuren ab. Beispiele hierfür sind Oxalsäuredihydrazid, Malonsäuredihydrazid, Bernsteinsäuredihydrazid, Glutarsäuredihydrazid, Adipinsäuredihydrazid, Sebacinsäuredihydrazid, Maleinsäuredihydrazid, Fumarsäuredihydrazid und/oder Itaconsäuredihyrazid; vorgezogen werden Glutarsäuredihydrazid und Adipinsäuredihydrazid.

Nach dem neuen Verfahren erhält man Polymer-Dispersionen, deren Filmbildetemperatur ohne Zusatz von Filmbildehilfsmitteln, meist im Bereich von +5 bis 40, insbesondere von 10 bis 30°C liegt. Trotzdem ergeben sie Filme, die praktisch unmittelbar nach dem Trocknen blockfest sind, so daß mit Hilfe dieser Bindemittel beschichtete Gegenstände nach ihrer Beschichtung verhältnismäßig rasch gestapelt werden können. Dies ist überraschend, zumal nach den Angaben in der US-PS 4141935 (Spalte 5, Zeile 5 bis 7 und Beispiel 1) Kern und Hülle eines durch zweistufige Emulsionspolymerisation hergestellten Polymerisats ihre Eigenschaften auch nach der Verarbeitung beibehalten sollen: Durch eine hohe Glastemperatur der äußeren Schale der Latexteilchen sollte daher eine hohe Filmbildetemperatur erwartet werden, zumal nach der Arbeit von Distler und Kanig, Colloid and Polym. Sci., 256 (1978), Seiten 1052 bis 1060 schon Latexteilchen mit einheitlicher Polymerisatzusammensetzung nach ihrer Verfilmung als Individuen im Film wiedergefunden werden können. Dies wäre umso mehr zu erwarten, wenn die Latexteilchen Schalen aufwiesen, die härter sind als ihr Kern. Zwangsläufig müßte daher die wesentlich höhere Glastemperatur der äußeren Hülle der Polymer-Teilchen für die Filmbildetemperatur entscheidend sein.

Es ist zwar aus der DE-AS 2163461 bekannt, durch Emulsionspolymerisation ein teilchenförmiges Material herzustellen, das aus einem kautschukartigen Kern aus vernetztem Acrylpolymeren und einer glasartigen äußeren Hülle aus polymerisiertem Methylmethacrylat sowie einer Übergangsschicht zwischen Kern und Hülle besteht, wobei die Glastemperatur des Kerns wesentlich unterhalb der der äußeren Hülle liegt, doch werden die dabei erhaltenen Dispersionen nicht als solche eingesetzt, sondern die Polymerisate nach der Koagulation der Dispersion zur Herstellung von Formkörpern verwendet, und dieser Schrift können keine Hinweise auf Filmbildetemperatur oder Blockneigung von daraus hergestellten Filmen entnommen werden.

Die nach dem neuen Verfahren hergestellten Polymer-Dispersionen eignen sich mit besonderem Vorteil als Bindemittel für Anstrichmittel und insbesondere Lasuren, wobei zusätzlich die üblichen Pigmente, Farbstoffe, Fungizide, Entbläuungsmittel und Insektizide in den üblichen Mengen mitverwendet werden können. Die mit den neuen Polymer-Dispersionen hergestellten Lasuren, ermöglichen ein rasches Beschichten von Holz, beispielsweise von Fensterrahmen, die praktisch unmittelbar nach dem Trocknen abgelagert werden können, ohne daß dann die Gefahr des Blockens besteht, soweit nur die Beschichtungen auf Raumtemperatur abgekühlt sind.

Die in den folgenden Beispielen angegebenen Teile und Prozente beziehen sich auf das Gewicht. Die darin angegebenen Volumenteile verhalten sich zu den Gewichtsteilen wie das Liter zum Kilogramm.

Beispiel 1

In einem Polymerisationsgefäß werden 200 Teile Wasser vorgelegt und auf 80°C erwärmt. Man löst dann 5 Teile Natriumlaurylsulfat und gibt 25 Teile einer 20 %igen wäßrigen Lösung eines mit 14 Mol Ethylenoxid ethoxylierten Nonylphenols zu. Man fügt dann 5 Teile von Zulauf (I) und 10 Teile von Zulauf (III) zu. Nach dem Anspringen der Reaktion wird 10 Minuten bei 80°C polymerisiert und dann mit Zulauf (I) und Zulauf (III) begonnen.

Zulauf (I), der innerhalb einer Stunde zugefahren wird, ist eine Emulsion aus 248 Teilen n-Butylacrylat, 27 Teilen Methylmethacrylat, 3,75 Teilen Acrylsäure, 12,5 Teilen einer 20 %igen wäßrigen Lösung des ethoxylierten Nonylphenols, 2,5 Teilen einer 50 %igen wäßrigen Lösung von Acrylamid und 155 Teilen Wasser.

Nach Beendigung von Zulauf (I) wird Zulauf (II) innerhalb einer Stunde in das Polymerisationsgemisch zugefahren. Zulauf (II) setzt sich aus 202 Teilen Methylmethacrylat, 23 Teilen n-Butylacrylat, 3,75 Teilen Acrylsäure, 12,5 Teilen der wäßrigen Lösung des ethoxylierten Nonylphenols, 2,5 Teilen der 50 %igen Acrylamid-Lösung und 155 Teilen Wasser zusammen.

Der Rest von Zulauf (III) wird zusammen mit Zulauf (I) innerhalb von 2 1/4 Stunden in das Polymerisationsgefäß gegeben. Zulauf (III) besteht aus einer Lösung von 2,5 Teilen Natriumpersulfat in 100 Teilen Wasser.

Nach Beendigung des Zulaufes der Monomeren und des Initiators wird das Polymerisationsgemisch eine weitere Stunde auf 80°C gehalten, dann abgekühlt und mit konzentrierter wäßriger Ammoniaklösung der pH-Wert auf 8 bis 9 gestellt. Man erhält eine 45 %ige wäßrige Polymer-Dispersion, deren minimale Filmbildetemperatur (MFT) 14°C beträgt.

Zur Prüfung der Blockfestigkeit von Filmen aus der erfindungsgemäß hergestellten Dispersion wurden PVC-Folien mit der Dispersion in einer Naßschichtdicke von 250µm beschichtet und nach dem Trocknen der Beschichtungen zwei beschichtete Folienstücke mit ihrer beschichteten Seite aufeinander gelegt und 24 Stunden bei 60°C mit $14.7 \cdot 10^4 N/m^2$ ($1{,}5\ Kp/cm^2$) belastet. Die Folienstücke ließen sich danach ohne merklichen Kraftaufwand und ohne jede Oberflächenbeschädigung voneinander trennen (Note 0).

Zur Prüfung der Blockfestigkeit wurde zudem eine farbige Lasur folgender Zusammensetzung geprüft:

| | |
|---|---|
| Propylenglykol | 58 Teile |
| Butylglykol | 20 Teile |
| feinteilige Kieselsäure | 20 Teile |
| handelsübliche Fungizid-Bläueschutz-Insektizid-Kombination | 30 Teile |
| transparentes Eisenoxid | 70 Teile |
| Polymer-Dispersion | 800 Teile |
| Entschäumer | 2 Teile |

Mit der Lasur wurden Holzkörper 3-schichtig beschichtet, wobei das Auftragsgewicht insgesamt 200 $g/m^2$ betrug. Nach dem Trocknen wurden jeweils 2 Holzkörper mit ihrer beschichteten Oberfläche 24 Stunden bei 60°C mit einem Druck von $1.23 \cdot 10^4 N/m^2$ (125 $g/cm^2$) aufeinander gepreßt. Es trat kein Blocken ein.

Vergleichsbeispiel

Man arbeitet wie in Beispiel 1 angegeben, verwendet jedoch bei sonst gleichen Bedingungen in Zulauf (I) 137,5 Teile Methylmethacrylat und 137,5 Teile n-Butylacrylat sowie in Zulauf (II) 112,5 Teile Methylmethacrylat und 112,5 Teile n-Butylacrylat. Man erhält dann unter sonst gleichen Bedingungen eine Polymer-Dispersion deren MFT 14°C beträgt. Die Blockfestigkeit von Filmen und Lasuren, die, wie oben angegeben geprüft wurden, zeigten die Note 5, d.h. die Beschichtungen waren jeweils untereinander fest verklebt.

Beispiel 2

Man arbeitet, wie in Beispiel 1 angegeben, setzt jedoch dem Zulauf (I) 261,3 Teile n-Butylacrylat und 13,7 Teile Methylmethacrylat, sowie in Zulauf (II) 213,8 Teile Methylmethacrylat und 11,2 Teile n-Butylacrylat ein. Bei sonst gleichen Bedingungen erhält man eine Polymer-Dispersion, deren MFT 20°C beträgt, und die gleich blockfest ist wie die Dispersion von Beispiel 1.

Beispiel 3

Man arbeitet, wie in Beispiel 1 angegeben, setzt jedoch in Zulauf (I) 192,5 Teile n-Butylacrylat und 82,5 Teile Methylmethacrylat, sowie in Zulauf (II) 157,5 Teile Methylmethacrylat und 67,5 Teile n-Butylacrylat ein. Man erhält dann unter sonst gleichen Bedingungen eine Polymer-Dispersion, der MFT 14°C, deren Filme und Lasuren nur geringfügig weniger blockfest sind, als die der Dispersion von Beispiel 1.

Beispiel 4

Man arbeitet im wesentlichen wie in Beispiel 1 angegeben, setzt jedoch als Vorlage ein Gemisch aus 187 Teilen Wasser, 0,5 Teilen Natriumlaurylsulfat, 25 Teilen einer 20 %igen wäßrigen Lösung des ethoxylierten Nonylphenols, 5 Teile von Zulauf (I) und 10 Teile von Zulauf (III) ein.

Zulauf (I) besteht aus 50 Teilen Styrol, 200 Teilen n-Butylacrylat, 3,75 Teilen Acrylsäure, 2,5 Teilen einer 50 %igen wäßrigen Lösung von Acrylamid, 2,25 Teilen Natriumlaurylsulfat und 12,5 Teilen einer 20 %igen wäßrigen Lösung des ethoxylierten Nonylphenols und 100 Teilen Wasser.

Zulauf (II) enthält 50 Teile n-Butylacrylat und 200 Teile Styrol sowie die gleichen weiteren Komponenten in den gleichen Mengen wie für Zulauf (I) angegeben.

Man erhält eine Polymerdispersion der MFT 0°C, deren Filme und Lasuren gleich blockfest sind wie die der Polymer-Dispersion von Beispiel 1.

Beispiel 5

Man legt ein Gemisch aus 182 Teilen Wasser, 5 Teilen Natriumlaurylsulfat und 25 Teilen einer 20 %igen wäßrigen Lösung von mit 14 Mol Ethylenoxid ethoxyliertem Nonylphenol, 5 Teile von Zulauf (I) und 10 Teile von Zulauf (III) vor und erwärmt unter Rühren auf 80°C. Nach dem Anpolymerisieren fährt man den restlichen Zulauf (I) innerhalb von 1 Stunde zu dem Polymerisationsgemisch. Er besteht aus 270 Teilen n-Butylacrylat, 30 Teilen Methylmethacrylat, 7,5 Teilen Acrylsäure, 2,5 Teilen einer 50 %igen wäßrigen Acrylamidlösung, 12,5 Teilen einer 20 %igen wäßrigen Lösung des ethoxylierten Nonylphenols und 105 Teilen Wasser.

Nach Beendigung von Zulauf (I) werden 8 Vol.-Teile konz. wäßrige Ammoniaklösung zugegeben (bis pH 7-8) und danach mit der Zugabe von Zulauf (II) begonnen. Zulauf (II) besteht aus 180 Teilen Methylmethacrylat, 20 Teilen n-Butylacrylat, 25 Teilen N,N'-Dimethylaminoethylmethacrylat, 12,5 Teilen einer 20 %igen wäßrigen Lösung des ethoxylierten Nonylphenols, 2,5 Teilen einer 50 %igen wäßrigen

Acrylamidlösung und 100 Teilen Wasser.

Zulauf (III), bestehend aus einer Lösung von 2,5 Teilen Natriumpersulfat in 100 Teilen Wasser, wird innerhalb von 2 1/4 Stunden, beginnend mit dem Zulaufenlassen von Zulauf (I), mit gleichbleibender Geschwindigkeit in das Polymerisationsgefäß gegeben.

Man erhält eine 50 %ige wäßrige Polymer-Dispersion, deren MFT 12°C beträgt. Daraus hergestellte Filme und Lasuren zeigen praktisch das gleich gute Blockverhalten wie die Dispersion von Beispiel 1.

Beispiel 6

Man arbeitet wie in Beispiel 1 angegeben, verwendet jedoch in Zulauf (I) und Zulauf (II) jeweils zusätzlich 7,5 Teile Diacetonacrylamid. Nach dem Abkühlen der erhaltenen Polymer-Dispersion und dem Zugeben des wäßrigen Ammoniak, gibt man zusätzlich noch 10 Teile Adipinsäuredihydrazid zu.

Man erhält dann eine Polymer-Dispersion der MFT 17°C. Sie ergibt als solche und in Form ihrer Lasuren Filme, deren Blockfestigkeit praktisch der Blockfestigkeit von Filmen bzw. Lasuren der Dispersion von Beispiel 1 entspricht.

**Patentansprüche**

1. Verfahren zur Herstellung von wäßrigen Polymer-Dispersionen, die eine niedere Filmbildetemperatur aufweisen und Filme mit hoher Blockfestigkeit bilden durch mehrstufige Emulsionspolymerisation von überwiegenden Mengen monoolefinisch ungesättigten Monomeren A, deren Homopolymerisate eine Glastemperatur von 0 bis -72°C haben mit monoolefinisch ungesättigten Monomeren B, deren Homopolymerisate eine Glastemperatur von 80 bis 140°C haben, 0 bis 6 Gew.%, bezogen auf die gesamten Monomeren, monoolefinisch ungesättigten Monomeren C, die Carboxyl- und/oder Carbonamidgruppen aufweisen und 0 bis 10 Gew.% bezogen auf die gesamten Monomeren, an vernetzend wirkenden olefinisch ungesättigten Monomeren D, dadurch gekennzeichnet, daß man zunächst

a) 1 bis 10 Gew.% eines Monomeren-Gemisches (I) aus 75 bis
98 Gew.-Teilen Monomeren A,
2 bis 25 Gew.-Teilen Monomeren B,
0,5 bis 10 Gew.-Teilen Monomeren C und
0 bis 10 Gew.-Teilen Monomeren D
als Vorlage in Gegenwart von 0,1 bis 2 Gew.%, bezogen auf die gesamten Monomeren (der Monomerengemische I und II) anionischem Emulgator und von 0 bis 1 Gew.%, bezogen auf die gesamten Monomeren, nicht-ionischem Emulgator, sowie eines wasserlöslichen radikalbildenden Polymerisationsinitiators, in Form einer 0,5 bis 4 %igen wäßrigen Emulsion polymerisiert, sodann

b) den Rest des Monomerengemisches (I) nach Maßgabe des Fortschreitens der Emulsionspolymerisation zuführt und schließlich nach Beendigung des Zulaufs des Monomerengemisches (I)

c) unter Weiterführung der Emulsionspolymerisation nach Maßgabe des Verbrauchs ein Monomerengemisch (II) zuführt, das aus
75 bis 98 Gew.-Teilen Monomeren B,
2 bis 25 Gew.-Teilen Monomeren A,
0 bis 10 Gew.-Teilen Monomeren C,
0 bis 10 Gew.-Teilen Monomeren D und/oder
0 bis 15 Gew.-Teilen monoolefinisch ungesättigten Ureidoverbindungen oder tert.-Aminoverbindungen
besteht, wobei der Anteil des Monomerengemisches (I) 40 bis 65 Gew.%, bezogen auf die Gesamtmenge der beiden Monomerengemische beträgt, als Monomere D monoolefinisch ungesättigte Carbonylverbindungen einsetzt, die Monomerengemische (I) und (II) dem Polymerisationsgefäß als solche oder als wäßrige Emulsion zuführt, derart, daß die entstehende wäßrige Polymerdispersion einen Polymergehalt von 40 bis 60 Gew.-%, bezogen auf die Polymer-Dispersion, und einen Gehalt an anionischem Emulgator von 0,5 bis 3 Gew.-%, bezogen auf das Polymere, hat, und der fertigen Polymerdispersion, wenn das Polymere Monomere D einpolymerisiert enthält, Hydrazide aliphatischer Dicarbonsäuren in einer Menge von 0,5 bis 1 Mol je Mol Carbonyl-Monomeres zusetzt.

2.Verwendung der nach dem Verfahren von Anspruch 1 hergestellten wäßrigen Polymer-Dispersionen als Bindemittel für Anstrichmittel.

**Claims**

1. A process for the preparation of an aqueous polymer dispersion which has a low film-forming temperature and forms films having a high block resistance, by multistage emulsion polymerization of predominant amounts of monoolefinically unsaturated monomers A, whose homopolymers have a glass transition temperature of from 0 to –72°C, with monoolefinically unsaturated monomers B, whose homopolymers have a glass transition temperature of from 80 to 140°C, from 0 to 6% by weight, based on the total amount of monomers, of monoolefinically unsaturated monomers C which possess carboxyl and/or carboxamide groups, and from 0 to 10% weight, based on the total amount of monomers, of olefinically unsaturated monomers D which effect crosslinking, wherein first

a) from 1 to 10% by weight of a monomer mixture (I) consisting of
from 75 to 98 parts by weight of monomer A,
from 2 to 25 parts by weight of monomer B,
from 0.5 to 10 parts by weight of monomer C and
from 0 to 10 parts by weight of monomer D
are initially taken and polymerized in the form of a 0.5–4% strength aqueous emulsion in the presence of from 0.1 to 2% by weight, based on the total amount of monomers (in monomer mixtures I and II), of an anionic emulsifier and from 0 to 1% by weight, based on the total amount of monomers, of a nonionic emulsifier, and in the presence of a water-soluble free radical polymerization initiator, then

b) the remainder of the monomer mixture (I) is fed in at the rate at which the emulsion polymerization progresses, and finally, when the addition of the monomer mixture (I) is complete,

c) a monomer mixture (II) which consists of
from 75 to 98 parts by weight of monomer B,
from 2 to 25 parts by weight of monomer A,
from 0 to 10 parts by weight of monomer C,
from 0 to 10 parts by weight of monomer D and/or
from 0 to 15 parts by weight of monoolefinically unsaturated ureido compounds or tertiary amino compounds is added at the rate at which it is consumed, while the emulsion polymerization is continued, the amount of monomer mixture (I) being from 40 to 65% by weight, based on the total amount of the two monomer mixtures, monoolefinically unsaturated carbonyl compounds being used as monomers D, the monomer mixtures (I) and (II) being fed into the polymerization vessel as such or in the form of an aqueous emulsion, so that the resulting aqueous polymer dispersion has a polymer content of from 40 to 60% by weight, based on the polymer dispersion, and a content of anionic emulsifiers of from 0.5 to 3% by weight, based on the polymer, and, when the polymer contains monomer D as copolymerized units, a hydrazide of an aliphatic dicarboxylic acid is added to the ready-prepared polymer dispersion in an amount of from 0.5 to 1 mole per mole of carbonyl monomer.

2. Use of an aqueous polymer dispersion prepared by the process of claim 1 as a binder for coating materials.

**Revendications**

1. Procédé de préparation de dispersions aqueuses de polymères, qui présentent une basse température filmogène ou feuillogène et forment des pellicules avec une résistance au blocage élevée, par une polymérisation en émulsion à étapes multiples de proportions prépondérantes de monomères A, à insaturation monooléfinique, dont les homopolymères possèdent une température de transition vitreuse de 0 à −72°C, avec des monomères B, à insaturation monooléfinique, dont les homopolymères possèdent une température de transition vitreuse de 80 à 140°C, de 0 à 6% en poids, par rapport aux monomères totaux, de monomères C, à insaturation monooléfinique, qui comportent des radicaux carboxyle et/ou carbamide et de 0 à 10% en poids, par rapport aux monomères globaux, de monomères D, à insaturation oléfinique, à activité réticulante, caractérisé en ce que l'on polymérise d'abord

a) de 1 à 10% en poids d'un mélange de monomères (I) constitué de 75 à 98 parties en poids de monomères A,
de 2 à 25 parties en poids de monomères B,
de 0,5 à 10 parties en poids de monomères C et
de 0 à 10 parties en poids de monomères D,
à titre de mélange préalable, en présence de 0,1 à 2% en poids, par rapport aux monomères globaux (les mélanges de monomères I et II) d'un émulsif anionique et de 0 à 1% en poids, par rapport aux monomères globaux, d'un émulsif non ionique, comme aussi d'un amorceur de polymérisation formateur de radicaux ou radicalogène, soluble dans l'eau, sous la forme d'une émulsion aqueuse à 0,5 à 4%, puis

b) on introduit le reste du mélange de monomères (I)
au fur et à mesure de la progression de la polymérisation en émulsion et, finalement, après l'achèvement de l'addition du mélange des monomères (I),

c) on introduit un mélange de monomères (II), sous poursuite de la polymérisation en émulsion au fur et à mesure de la consommation en mélange de monomères (II), lequel se compose de
75 à 98 parties en poids de monomères B,
2 à 25 parties en poids de monomères A,
0 à 10 parties en poids de monomères C,
0 à 10 parties en poids de monomères D et/ou
0 à 15 parties en poids de composés du type tert-amino ou de composés du type uréido, à insaturation monooléfinique,
où la fraction du mélange des monomères (I) varie de 40 à 65% en poids par rapport à la quantité globale des deux mélanges de monomères, on utilise, à titre de monomères D, des composés carbonylés à insaturation monooléfinique, on introduit les mélanges de monomères (I) et (II) dans le récipient de polymérisation, tels quels ou sous forme d'une émulsion aqueuse, en manière telle que la dispersion aqueuse de polymère qui se forme possède une teneur en polymère qui varie de 40 à 60% en poids, par rapport à la dispersion de polymère et une teneur en émulsif anionique qui fluctue de 0,5 à 3% en poids, par rapport au polymère et on ajoute à la dispersion de polymère prête, lorsque le polymère contient des monomères D en incorporation polymère, des hydrazides d'acides dicarboxyliques aliphatiques, en une proportion de 0,5 à une mole par mole de monomère carbonylé.

2. Utilisation des dispersions de polymères aqueuses préparées par mise en œuvre du procédé suivant la revendication 1, à titre de liant pour des peintures.